# EUROPEAN PATENT APPLICATION

(11) **EP 4 755 270 A1**
(43) Date of publication of application: **10.06.2026**
(21) Application number: 24383340.7
(22) Date of filing: 09.12.2024
(51) Int. Cl.: A47J 31/36, A47J 31/42

(54) **COFFEE MACHINES**

(71) Applicant: Coffee IS Incapto, S.L., 08018 Barcelona (ES)
(72) Inventor: LÓPEZ RODRIGUEZ, Carlos, 08027 Barcelona (ES); GIRALT MIRALLES, Helena, 08034 Barcelona (ES)
(74) Representative: ZBM Patents - Zea, Barlocci & Markvardsen

(57) **Abstract**

A coffee machine is provided. The coffee machine comprises a grinder for grinding coffee beans, and a brewing device comprising a brewing piston movable relative to a brewing cup; wherein the coffee machine comprises a driving unit for driving the grinder and the brewing piston, and a clutch to transmit driving force from the driving unit to the grinder and the brewing piston. A method of operation of the coffee machine is also provided. The method comprises transmitting driving force to the grinder; receiving ground coffee into the brewing device; switching driving force transmission to move the brewing piston towards the brewing cup; brewing the ground coffee; and transmitting driving force to the brewing piston to be moved away from the brewing cup.

## Description

The present disclosure relates to coffee machines and methods of operation of coffee machines.

### BACKGROUND

Espresso coffee machines can allow the users to brew ground coffee and to obtain a coffee drink with significantly good organoleptic properties. One example of the "espresso" coffee machines includes automatic coffee machines. The automatic coffee machines are usually designed to reduce as much as possible the number of tasks to be realized by the user. For instance, the automatic coffee machine can include grinding units or grinders and brewing units or brewing devices that can operate with little intervention or substantially no user intervention.

The grinder can be configured to grind coffee beans. The ground coffee obtained from the grinder can be fed into a brewing receptacle or chamber. The brewing device can be configured to press the ground coffee matter within the brewing receptacle to form a coffee cake. Then heated water under a relative overpressure can be passed through the coffee cake inside the brewing chamber.

The automatic coffee machines may have several parts and complex structures of the grinder and brewing devices to achieve a significantly reduced involvement of the user. The several parts and complex structures of the grinder and the brewing devices may render the automatic coffee machines bulky and complex.

The present disclosure provides examples of coffee machines and methods that at least partially resolve some of the aforementioned disadvantages.

### SUMMARY

In a first aspect, a coffee machine is provided. The coffee machine comprises a grinder for grinding coffee beans, and a brewing device for brewing ground coffee. The brewing device comprises a brewing piston movable relative to a brewing cup. The coffee machine further comprises a driving unit for driving at least one of the grinder and the brewing piston, and a clutch mechanism configured to transmit driving force from the driving unit to at least one of the grinder and the brewing piston.

The coffee machine according to the first aspect comprises a single driving unit for driving the operation of the grinder and the brewing device. The same driving unit may be configured to operate the grinder and cause the brewing piston and the brewing cup to move relative to each other during a brewing operation. This may allow to obtain a relatively compact overall size of the coffee machine. Moreover, a single driving unit may allow simplifying the operation of the coffee machine.

The clutch mechanism may be configured to selectively provide the grinder and the brewing device with driving force from the driving unit, for instance, a single driving unit.

In a further aspect, a method of operation of a coffee machine is disclosed. The method comprises transmitting driving force from a driving unit to a grinder for grinding coffee beans. The method further comprises receiving ground coffee into a brewing device, wherein the brewing device comprises a brewing piston and a brewing cup. Furthermore, the method comprises switching driving force transmission from the grinder to the brewing piston to bring the brewing piston closer to the brewing cup to define a brewing chamber. Moreover, the method comprises brewing the ground coffee inside the brewing chamber. The method also comprises transmitting driving force from the driving unit to the brewing piston to move the brewing piston away from the brewing cup.

Advantages derived from this aspect may be similar to those mentioned regarding the first aspect.

Throughout the present disclosure, expressions such as above, below, side, forward, backward, horizontal, longitudinal, upright, etc are to be understood taking into account the construction of a coffee machine in an operating condition as a reference.

In the present disclosure, the terms "coffee machine", "automatic coffee machine", and "superautomatic coffee machine" can be used interchangeably.

### BRIEF DESCRIPTION OF THE DRAWINGS

Non-limiting examples of the present disclosure will be described in the following, with reference to the appended drawings, in which:
Figure 1 schematically illustrates a partial view of a coffee machine according to one example of the present disclosure;
Figures 2 and 3 schematically illustrate perspective views of the coffee machine of Figure 1 seen from different angles according to one example of the present disclosure;
Figure 4 schematically illustrates a side view of the coffee machine of Figure 1 according to one example of the present disclosure;
Figure 5 schematically illustrates a driving unit and a clutch mechanism according to one example of the present disclosure;
Figures 6 and 7 schematically illustrate partial views of the driving unit and the clutch mechanism of Figure 4 according to one example of the present disclosure;
Figures 8 and 9 schematically illustrate a brewing piston seen from different angles according to one example of the present disclosure;
Figures 10 and 11 schematically illustrate a brewing cup seen from different angles according to one example of the present disclosure;
Figures 12 -22 schematically illustrate cross sections of the coffee machine at different positions of the coffee machine in operation according to one example of the present disclosure; and
Figure 23 is a block diagram of a method of operation of coffee machines according to an example of the present disclosure.

### DETAILED DESCRIPTION OF EXAMPLES

In these figures, the same reference signs have been used to designate matching elements. Some parts of the coffee machine have not been illustrated for the sake of clarity.

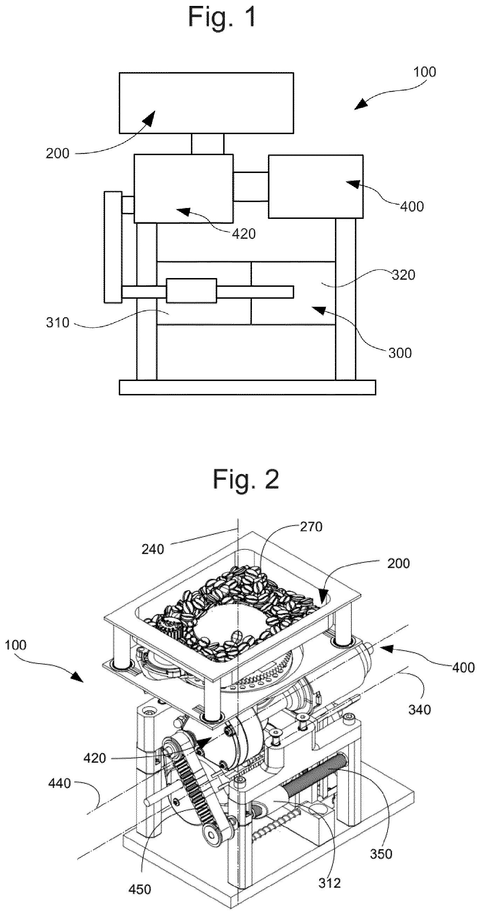

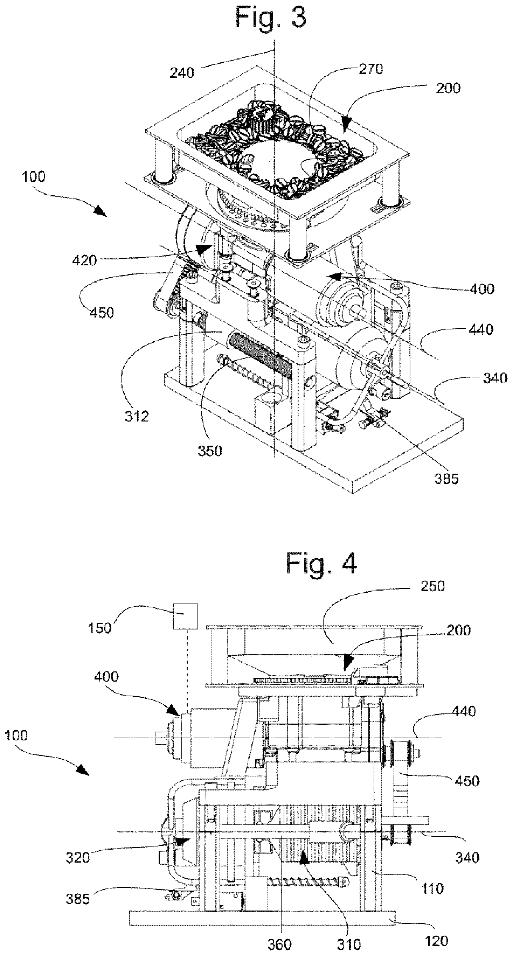

Figure 1 schematically illustrates a partial view of a coffee machine 100 according to one example of the present disclosure. Figures 2 and 3 schematically illustrate perspective views of the coffee machine of Figure 1 seen from different angles according to one example of the present disclosure. Figure 4 schematically illustrates a side view of the coffee machine of Figure 1 according to one example of the present disclosure.

The coffee machine 100 comprises a grinder 200 for grinding coffee beans 270. The coffee beans 270 may be fed into the grinder 200 through a hopper 250 or the like. The grinder 200 can crush and ground the coffee beans 270. The hopper 250 may comprise at least one load cell to measure weight of the coffee beans receive therein. The grinder 200 may comprise grinding members 210 such as burr, blades, etc. configured to transform the coffee beans into ground coffee. The grinding members may be actuated when they receive a driving force. The grinding members may be rotatably actuated to grind the coffee beans. The grinding members may rotate about a grinder rotation axis 240.

The coffee machine 100 also comprises a brewing device 300 for brewing the ground coffee. The ground coffee that is received in the brewing device 300 can be ground, at least partially in the grinder 200. In some examples, a portion of the ground coffee may be fed without passing through the grinder.

The brewing device 300 comprises a brewing piston 310 movable relative to a brewing cup 320. The brewing piston 310 and the brewing cup 320 may comprise general shapes which are substantially complementary to each other, at least partially. The brewing piston 310 and the brewing cup 320 may comprise configurations that substantially match each other, at least partially.

A brewing chamber 330 may be defined by the brewing piston 310 and the brewing cup 320 when they are in a coupled position. The extraction of coffee solubles from coffee grounds can be performed in the brewing chamber in a coupled position. The ground coffee can be pressed inside the brewing chamber 330 in the coupled position.

The brewing device 300 may comprise a brewing longitudinal axis 340. The brewing piston 310 may be movable along the brewing longitudinal axis 340. The relative movement between the brewing piston 310 and the brewing cup 320 may be performed along the brewing longitudinal axis 340.

In the illustrated examples, the brewing longitudinal axis 340 is arranged substantially horizontal. The relative movement of the brewing piston 310 and the brewing cup 320 may define a substantially horizontal path. The brewing piston 310 and the brewing cup 320 may be brought together to define the brewing chamber 330 in the coupled or closed position. The brewing piston 310 and the brewing cup 320 may be move away from each other in a decoupled or open position. Details of the operation of the brewing device 300 are provide herein.

In the attached examples, the brewing device 300 is arranged between the grinder 200 and a base portion or bottom 120 of the coffee machine 100. This way, the ground coffee can fall into the brewing device 300 when leaves the grinder 200 by gravity. However, in some cases, the coffee machine 100 may comprise a pusher to promote ground coffee ejection from the grinder 200.

The coffee machine 100 further comprises a driving unit 400 for driving at least one of the grinder 200 and the brewing piston 310. The grinder 200 and the brewing piston 310 can be selectively driven by the same driving unit. In some examples, the driving unit 400 may comprise an electric motor having a motor rotation axis 440. A single electric motor may drive at least one of the grinder 200 and the movable brewing piston 310. In some examples, a single or unique driving unit can selectively operate the grinder and the brewing device. The electric motor may comprise an output shaft 410. In examples, the motor rotation axis 440 may be arranged substantially parallel to the output shaft 410. The output shaft 410 may be arranged along the motor rotation axis 440. In some cases, the motor rotation axis 440 may be arranged substantially horizontal.

In examples, the motor rotation axis 440 can be substantially arranged parallel to the brewing longitudinal axis 340. A single driving unit horizontally placed and parallel to the length of the brewing device which may be also substantially horizontally arranged. This feature may help to obtain a significantly compact overall design of the coffee machine. A coffee machine having such feature may optimise space utilization.

In examples, the grinder rotation axis 240 may be arranged substantially upright. The grinder rotation axis 240 may be arranged substantially perpendicular to the motor rotation axis 440 and/or the brewing longitudinal axis 340.

The coffee machine 100, according to some examples, can comprise a clutch mechanism 420 configured to transmit driving force from the driving unit 400 to at least one of the grinder 200 and the brewing piston 310. This way, the driving force outputted by the driving unit 400 may be transmitted to the grinder and/or the brewing piston 310.

The clutch mechanism 420 may be configured to allow or cut off driving force transmission from the driving unit 400 to the grinder 200 and/or the brewing piston 310. In some cases, the clutch mechanism 420 can cut off driving force transmission so that the grinder 200 and the brewing device 300 may be in an idle state. In some cases, the clutch mechanism 420 may allow the force drive transmission to one or both of the grinder 200 and the brewing device 300.

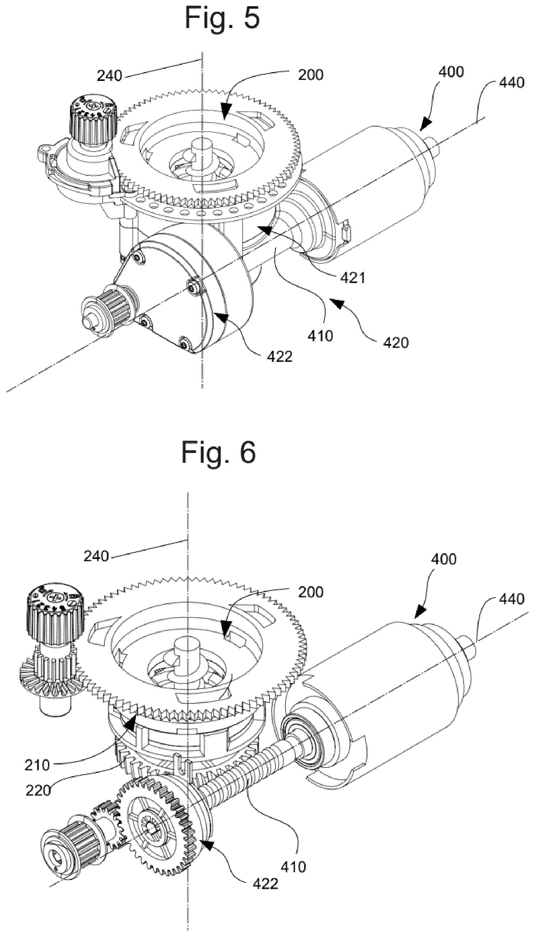

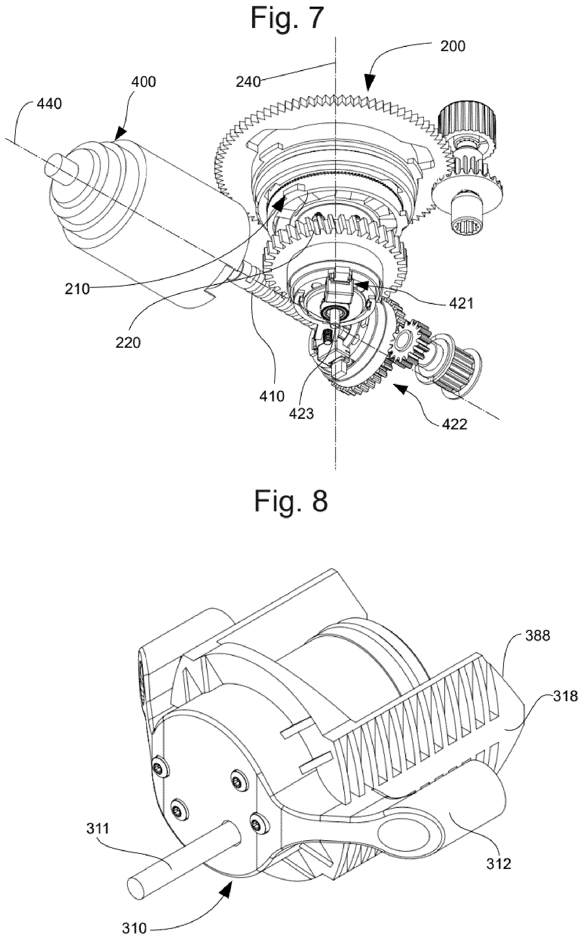

Figure 5 schematically illustrates a driving unit and a clutch mechanism according to one example of the present disclosure. Figures 6 and 7 schematically illustrate partial views of the driving unit and the clutch mechanism of Figure 4 according to one example of the present disclosure.

The clutch mechanism 420 may comprise a grinder clutch 421 and a brewing clutch 422. The grinder clutch 421 and/or the brewing clutch 422 may comprise an electromagnetic clutch. The clutch mechanism may adopt different positions in order to allow or cut off driving force transmission through. Both the grinder clutch 412 and the brewing clutch 422 may receive the driving force from the driving unit 400 through the output shaft 410.

The output shaft 410 may comprise a worm screw that may spin about the motor rotation axis 440. The output shaft 410 of the Figures is operatively connected to the grinder clutch 412 and the brewing clutch 422. The worm screw meshes a worm gear 220 connected to the grinder clutch 412. The worm screw of the output shaft 410 and the worm gear 220 may form a worm drive or endless screw. The worm drive may be arranged between the driving unit 400 and the brewing clutch 422. The worm gear 220 may rotate about the grinder rotation axis 240, so the motion of two substantially perpendicular axes can be translated.

The coffee machine 100 may comprise a grind connector 423 to transmit driving force from the grinder clutch 421 to the rest of the grinder 200. The grind connector 423 may comprise a rod, stud, or any suitable mechanism. The grinder clutch 421 may be operated to allow or cut off the transmission of driving force between the worm gear 220 and the grind connector 423.

As can be seen in Figures 6 and 7, the brewing clutch 422 is arranged substantially at one end portion of the output shaft 410 opposite to the driving unit 400. The brewing clutch 422 may allow to transmit or cut off the driving force to the brewing device 300.

In these examples, the brewing clutch 422 comprises a gear reducer to translate driving force to the brewing device 300. In some examples, the brewing clutch 422 may be void of the gear reducer.

The brewing device 300 may comprise a brewing threaded spindle 350 to move the brewing piston 310 along the brewing longitudinal axis 340. In examples, the brewing threaded spindle 350 may be substantially parallel to the brewing longitudinal axis 340.

In the attached Figures, the coffee machine 100 comprises a transmission mechanism such as a belt 450 to transmit driving force from the brewing clutch 422 to the brewing threaded spindle 350. In some cases, the coffee machine may comprise a chain drive, gears, or the like instead of the belt. The belt 450 may transmit the driving force from the higher output shaft 410 to the lower brewing threaded spindle 350. The transmission mechanism may allow to translate driving force between the two substantially parallel axes namely the motor rotation axis 440 and the longitudinal axis of the brewing threaded spindle 350.

The brewing piston 310 may comprise a spindle nut 312 configured to be moved back and forth along the brewing threaded spindle 350. The spindle nut 312 can mesh the brewing threaded spindle 350. The spindle nut 312 may be attached to the brewing piston 310.

The brewing device 300 may comprise a brewing guide 360 to guide the movement of the brewing piston 310 along the brewing longitudinal axis 340. In some examples, the brewing guide 360 may be substantially parallel to the brewing longitudinal axis 340.

In some cases, the brewing threaded spindle 350 and the brewing guide 360 may be substantially parallel to each other. The brewing threaded spindle 350 and the brewing guide 360 may be arranged on both sides with respect to the brewing longitudinal axis 340. The brewing threaded spindle 350 and the brewing guide 360 are attached to the rest of the coffee machine 100.

Since the brewing piston 310 can be slidably attached to the brewing guide 360 and to the brewing threaded spindle 350 through the spindle nut 312, a rotation of the brewing threaded spindle 350 may cause the brewing piston 310 to move back and forth along the brewing longitudinal axis 340.

In some examples the brewing guide may comprise a guiding rod or a guiding rail to guide the movement of the brewing piston 310 along the brewing longitudinal axis 340.

As can be seen in the attached figure, the brewing device 300 may comprise a generally cylindrical shape. The brewing chamber 330 may comprise a generally cylindrical shape. However, other shapes could be chosen such as a prism or the like.

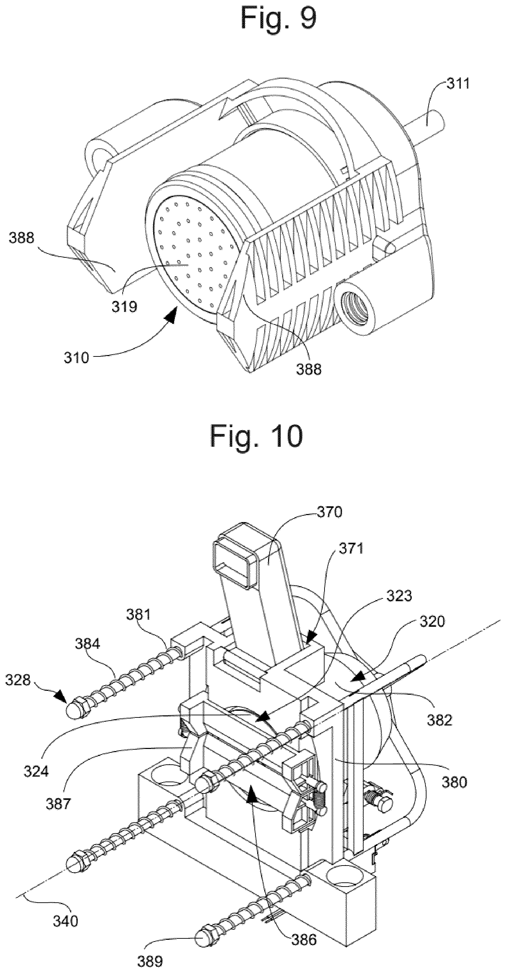

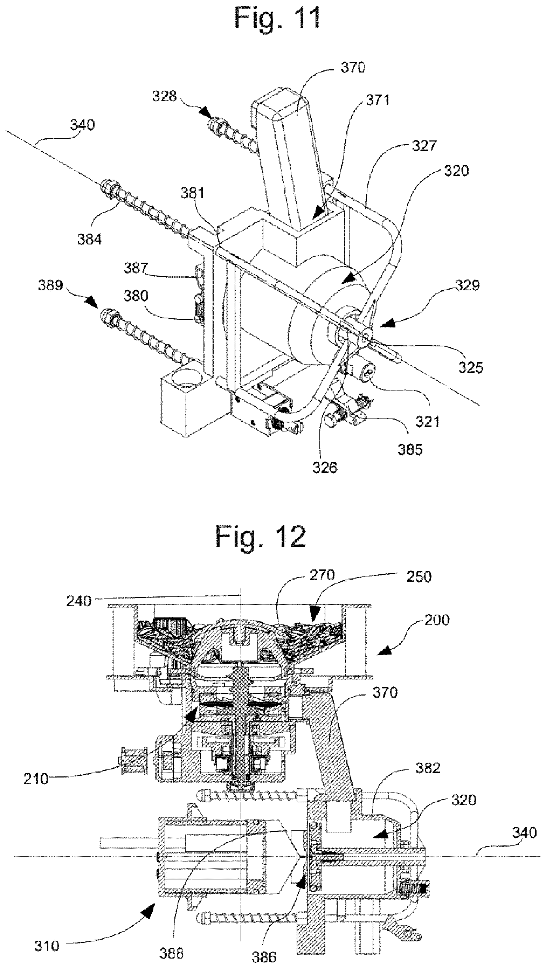

Figures 8 and 9 schematically illustrate a brewing piston 310 seen from different angles according to one example of the present disclosure. Figures 10 and 11 schematically illustrate a brewing cup 320 seen from different angles according to one example of the present disclosure.

In examples, the brewing device 300 may comprise a plunger 323 and the brewing cup 320 may be configured to receive the plunger 323. The plunger may be received inside the brewing cup. The plunger 323 may be configured to be moved along the brewing longitudinal axis 340. In some examples, the plunger 323 may be arranged substantially parallel to the brewing longitudinal axis 340. In some cases, the plunger 323 can be positioned along the brewing longitudinal axis 340.

The brewing cup 320 or vessel may be arranged such that the opening of the brewing cup 320 may substantially face the brewing piston 310. In some cases, the brewing cup 320 may be arranged in such a way that the longitudinal axis of the brewing cup may be arranged substantially parallel to the brewing longitudinal axis 340. In some examples, the brewing cup 320 can be arranged along the brewing longitudinal axis 340.

In the example of Figures 10 and 11, the plunger 323 comprises a first plunger end 324 configured to press coffee material (not shown for the sake of clarity) with the brewing piston 310. The plunger of the example also comprises a second plunger end 325 opposite to the first plunger end 324. The first plunger end 324 can be opposite to the second plunger end 325 along the brewing longitudinal axis 340. The brewing cup 320 can comprise a plunger hole 326 to slidably receive at least a portion of the plunger 323 in such a way that the second plunger end 325 protrudes from the brewing cup 320.

The brewing device 300 may comprise a holding arm 327 connected to the plunger 323. The holding arm 327 may comprise a first arm end 328 configured to protrude from the brewing cup 320, and a second arm end 329 configured to be connected to the plunger 323. The holding arm 327 may be configured to hold the plunger 323 relative to the brewing cup 320.

The brewing device 300 may comprise a cup flange 380 having an arm through hole 381 to slidably receive at least a portion of the holding arm 327. The cup flange 380 may be arranged around the opening of the cup. The first arm end 328 may be arranged to protrude from the arm through hole 381.

In some cases, the brewing device 300 may comprise two holding arms 327 embracing, at least partially, the brewing cup 320. In the examples of Figure 10 and 11, the brewing device 300 comprises four holding arms 327 embracing, at least partially, the brewing cup 320. Regardless of the number of holding arms 327, the holding arms 327 may be arranged substantially symmetrically with respect to the brewing longitudinal axis 340. The holding arms 327 may be radially arranged about the brewing longitudinal axis 340. In examples, the holding arm 327 may comprise a generally L-shaped configuration.

As can be seen in Figures 10 and 11, a side wall 382 of the cup 320 is arranged between the holding arm 327 and the first plunger end 324.

The brewing device 300 may comprise a spring 384 arranged between the first arm end 328 and the cup flange 380 in such a way that the first arm end 328 may be urged away from the cup flange 380. The first arm end 328 may be biassed by the spring 384 to be away from the cup flange 380. In some cases, the first arm end 328 is closer to the cup flange 380 when the spring is in a compressed state, and the first arm end 328 is further from the cup flange 380 when the spring is in an extended state. The extended state may comprise a condition of the spring which is less compressed than the compressed state. In some examples, the first arm end 328 may be urged away from the cup flange 380 along the brewing longitudinal axis 340. In the illustrated examples, each holding arm 327 carries a spring 384.

In the examples of Figures 10 and 11, the holding arm 327 comprises a projection 389 to retain the spring 384 between the cup flange 380 and the first arm end 328.

In some examples, the holding arm 327 may be configured to be moved generally along the brewing longitudinal axis 340. The holding arm may be configured to be moved at least between a first arm position and a second arm position, and vice versa. The distance between the first arm end 328 and the cup flange 380 may be substantially greater in the first arm position than in the second arm position. In some cases, the first arm position may correspond to the extended state of the spring 384 and the second arm position may correspond to the compressed state of the spring 384.

The brewing piston 310 may be configured to push the plunger 323 such that the holding arm 327 can be moved from the first arm position to the second arm position when the brewing piston 310 is moved toward the brewing cup 320. The brewing piston 310 may push, at least, the plunger 323 which can be moved along the brewing longitudinal axis 340. The holding arm 327 may be moved as well and the first arm end 328 may be brought closer to the cup flange 380. Details about different relative positions between the brewing piston 310 and the brewing cup 320 are provided herein.

Since the holding arm 327 and the plunger 323 can be connected to each other, a movement of the holding arm 327 along the brewing longitudinal axis 340 may cause the plunger 323 to move as well. Therefore, the action of the springs 384 may cause the plunger 323 to move against the brewing piston 310.

In examples, the brewing device 300 may comprise a latch 385 to retain the holding arm 327 relative to the brewing cup 320. The latch 385 can be activated by a solenoid actuator. The latch 385 can interlock the holding arm 327 to prevent the plunger 323 from moving back towards the brewing piston 310.

In some examples, the brewing device 300 may comprise a sliding gate 386 configured to slide on the cup flange 380 and perpendicularly to the brewing longitudinal axis 340. The sliding gate 386 may be guided by the cup flange 380. The sliding gate 386 may be elastically biased to maintain a closed position.

The sliding gate 386 may be configured to clean up, at least partially, dregs of ground coffee on the plunger 323 after brewing operation. The sliding gate 386 can clean up the plunger 323 upon closure. In some cases, the sliding gate 386 may slide on the cup flange 380 and the first plunger end 324.

In some examples, the sliding gate 386 may comprise a chamfered edge 387 configured to slide on a chamfered surface 388 of the brewing piston 310 facing the brewing cup 320. The chamfered edge 387 may be substantially complementary to the chamfered surface 388, at least partially. The chamfered edge 387 can protrude from the rest of the gate as can be seen in Figure 10. The chamfered surface 388 may be arranged in a cover 318 of the brewing piston 310. The cover 318 may be configured to overlap, at least partially, the brewing cup 320 in a coupled position. The cover 318 of the illustrated examples comprises a two-wing configuration, wherein each wing is arranged substantially at each side of the brewing longitudinal axis 340.

The sliding gate 386 may be configured to be opened by the brewing piston 310 when the chamfered surface 388 and the chamfered edge 387 are brought into contact therewith. This way, the movement of the brewing piston 310 towards the brewing cup 320 may force the sliding gate 386 to be progressively opened. The sliding gate 386 may be closed when the brewing piston 310 is moved away from the brewing cup 320 and there is not substantial contact between the chamfered surface 388 and the chamfered edge 387.

The sliding gate 386 may be opened in a perpendicular direction to the brewing longitudinal axis 340 when the brewing piston 310 and so its chamfered surface 388 is moved towards the cup flange 380. The sliding gate 386 may be closed in the perpendicular direction to the brewing longitudinal axis 340 when the brewing piston 310 is moved away from the cup flange 380.

In examples, the brewing device 300 may comprise a receiving portion 370 associated with an opening 371 of the brewing cup 320 to receive ground coffee from the grinder 200. The receiving portion 370 may act as a duct to lead the ground coffee from the grinder 200 to the inside of the brewing cup 320. As the grinder can be arranged above the brewing cup 320, the ground coffee may fall into the inside of the brewing cup 320 by gravity through the receiving portion 370.

In examples of the coffee machine 100, one of the brewing piston 310 and the brewing cup 320 may comprise a water inlet 311 and the other one may comprise a dispensing outlet 321. The heated water may enter the brewing chamber 330 through the water inlet 311. An extracted coffee drink may leave the brewing chamber 330 through the dispensing outlet 321.

In some examples of the coffee machine 100, one of the brewing piston 310 and the brewing cup 320 may comprise a shower screen and the other one may comprise a plunger. The shower screen may allow to introduction heated water into the brewing chamber 330 while the plunger 323 may be the counterpart to press the ground coffee inside the brewing chamber 330. The dispensing outlet 321 may be arranged at the plunger 323. In the example of Figures 8 and 9, the brewing piston 310 comprises the shower screen 319.

A control unit 150 can manage the operation of the coffee machine 100. An example of control unit 150 has been illustrated in Figure 4. The control unit 150 may be configured to control or manage the operation of parts of the coffee machine 100. In examples, the control unit is configured to command devices of the coffee machine 100. According to some examples, the control unit 150 may control the operation of, at least, a water pump, a water heater, the driving unit 400, and/or the clutch mechanism 420. The control unit 150 could be also configured to selectively operate the grinder clutch 421 and/or the brewing clutch 422. Therefore, the control unit 150 may also control the operation of the grinder 200 and the brewing device 300.

The control unit 150 may comprise machine-readable instructions that include predetermined operation parameters such as timing, flow rates, pressures, temperatures, coffee volumes, etc. The control unit 150 may be configured to dynamically adapt the operation parameters to particular operation conditions of the coffee machine 100.

In some examples, the control unit 150 may command the operation of the coffee machine 100 based on the predetermined operation parameters. In these examples, the control unit 150 comprises an open-loop architecture.

In some examples, the coffee machine 100 may comprise a plurality of sensors arranged in different parts of the coffee machine 100 to provide the control unit with operation data of those different parts. For example, the sensors may comprise pressure sensors, temperature sensors, flow rate sensors. The control unit 150 may command the operation of the coffee machine 100 based on the feedback received from the sensors. The control unit 150 may command the coffee machine 100 at a starting point based on the predetermined operation parameters. Then, the control unit 150 may be configured to dynamically adapt the operation parameters over the time depending on the received feedback. In these examples, the control unit 150 comprises a closed-loop architecture.

The coffee machine 100 can include a housing, not illustrated for the sake of clarity, and a frame 110 inside the housing. As can be seen in Figure 4, the frame 110 can support the rest of parts of the coffee machine 100. The hopper 250 can be accessed from the top to receive coffee beans. The frame 110 can also support a boiler or the like to heat water (not illustrated). The coffee machine may also include an ejector mechanism to eject the coffee cake from the brewing device 300 after coffee extraction. The extracted coffee drink may be dispensed through a dispensing spout in fluid communication with the dispensing outlet 321.

Figures 12 -22 schematically illustrate cross sections of the coffee machine at different positions of the coffee machine in operation according to one example of the disclosure. In the following an example of the operation of the coffee machine 100 according to the present disclosure is provided. In these examples, the rotation direction of the brewing threaded spindle 350 about the brewing longitudinal axis 340 may cause the brewing piston 310 to be moved along the brewing longitudinal axis 340 both towards the brewing cup 320 and away from the brewing cup 320. The first or second rotation direction of the brewing threaded spindle 350 may depend on the rotation direction of the output shaft 410. The spin direction of the output shaft may depend on whether the driving unit 400 is commanded to rotate clockwise or counterclockwise direction. The driving unit 400 may be selectively operated to rotate in mutually opposite first rotation direction and second rotation direction. Either of the first and second rotation directions may correspond to a clockwise or counterclockwise direction.

The driving unit 400 may be operated, for instance, due to a command of the user. The user command may be received through a user interface arranged in the coffee machine or through an electronic device in data communication with the control unit 150. The data communication may comprise a wireless communication.

In the example of the electric motor, the output shaft 410 can rotate to transmit driving force to the parts of the coffee machine 100. The clutch mechanism 420 may receive a command from the control unit to allow driving force transmission to the grinder 200. The clutch mechanism 420 may receive a command from the control unit to allow driving force transmission to the brewing device 300 and cut off driving force transmission to the grinder 200 when the clutch mechanism 420 receive the corresponding input from the control unit. The grinder 200 may stop after a predetermined period or when a predetermined amount of coffee ground is measured by the load cells of the hopper. In the example of the clutch mechanism 420 comprising a grinder clutch 421 and a brewing clutch 422, the control unit may selectively command each of the grinder clutch 421 and the brewing clutch 422 to operate.

The example of Figure 12 illustrates a configuration prior to starting a brewing operation. The driving unit 400 can be switched off, and the brewing piston 310 can be away from the brewing cup 320. The sliding gate 386 is in the closed position. This Figure 12 illustrates an example of first arm position.

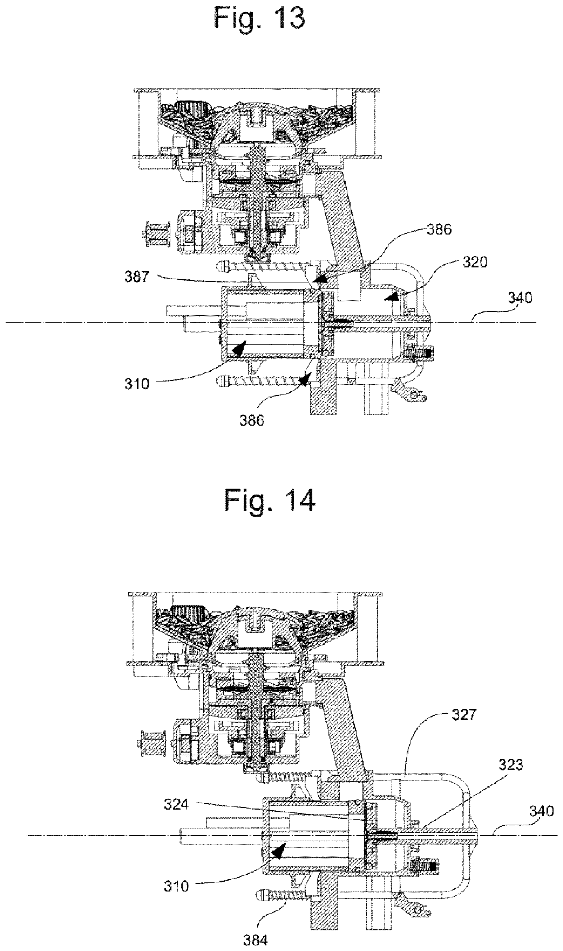

In the example of Figure 13, the driving unit 400 has been switched on. The clutch mechanism 420 is also operated, for instance the brewing clutch 422, to transmit driving force through the belt 450. The brewing threaded spindle 350 can rotate about the brewing longitudinal axis 340 in a clockwise or counterclockwise direction.

The brewing piston 310 may be slidably guided by the brewing guide 360, so the rotation of the brewing threaded spindle 350 about the brewing longitudinal axis 340 may cause that the spindle nut 312 and so the brewing piston 310 can be moved towards the brewing cup 320. The sliding gate 386 may be opened by the force applied by the chamfered surface 388 of the brewing piston 310 to the chamfered edge 387 of the sliding gate 386. The complementary shape of the chamfered surface 388 and the chamfered edge 387 may help to move the components of the sliding gate 368 in a perpendicular direction to the brewing longitudinal axis 340 when the brewing piston moves towards the brewing cup 320.

In Figure 14, the brewing piston 310 has been further moved with respect to the example of Figure 13. The brewing piston 310 may contact the first plunger end 324 and move the plunger 323 and the holding arms 327 towards the bottom of the brewing cup 320, opposite to the opening. The springs 384 are becoming more compressed than the example of Figure 13.

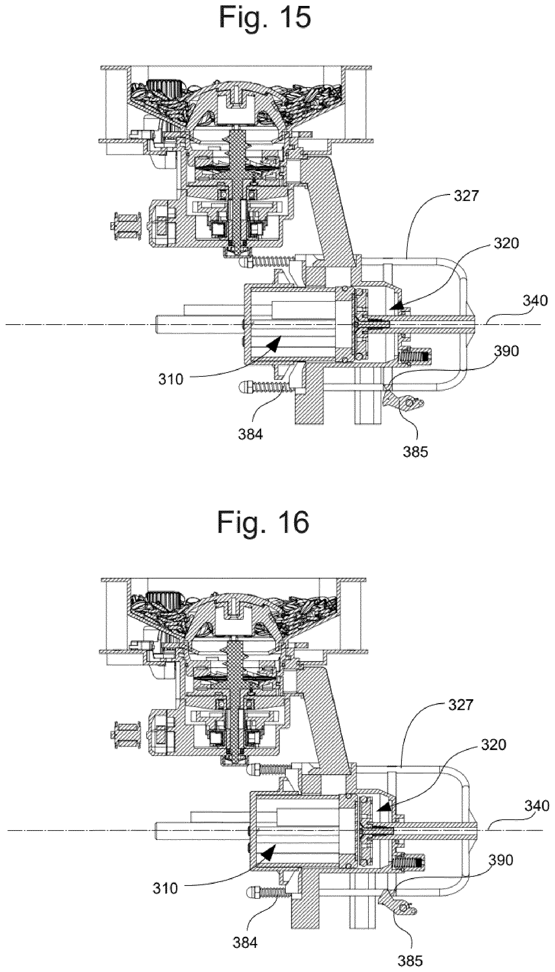

Figures 15 and 16 show further positions when the brewing piston 310 is moved along the brewing longitudinal axis 340 towards the brewing cup 320. The brewing cup 320 of the examples comprises an anchoring bar 390 to press down the latch 385 in Figure 15. Once the anchoring bar 390 passes over the latch 385, the latch may retain the holding arms 327 as illustrated in Figure 16. The latch 385 and the holding arms 327 may interlock as illustrated in Figure 16.

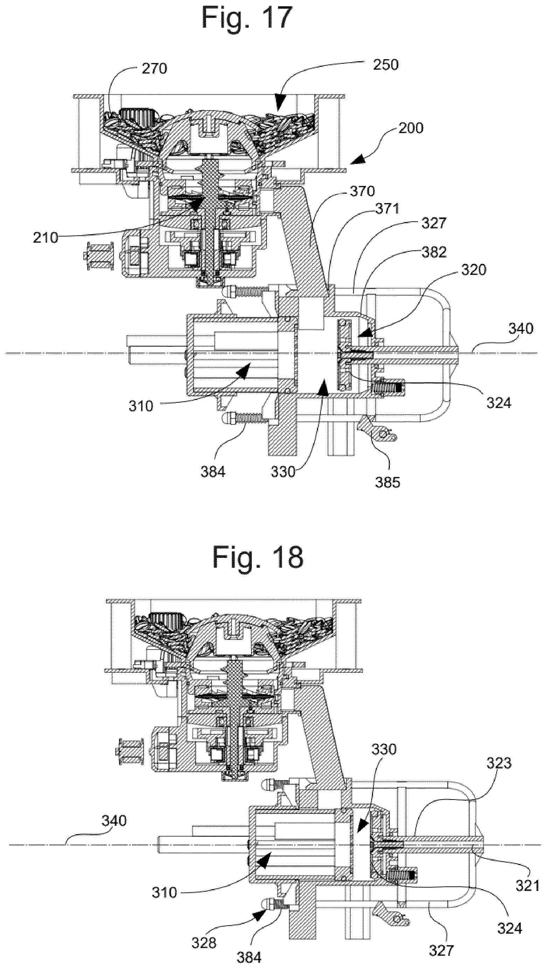

In the example of Figure 17, the driving unit 400 may be commanded to operate in a reverse direction so the brewing piston 310 moves away from the brewing cup 320 along the brewing longitudinal axis 340. The brewing device 300 is in the decoupled position. The brewing chamber 330 can be defined between the brewing piston 310 and the brewing cup 320, for instance, between the cup 320 and the brewing piston. The control unit 150 may command the brewing clutch 422 to cut off driving force transmission from the driving unit 400 to the brewing piston 310. The control unit 150 may command the grinder clutch 421 to allow driving force transmission from the driving unit 400 to the grinder 200. The ground coffee can fall from the grinder 200 into the brewing device 300. The ground coffee pass through the receiving portion 370 and the opening 371 of the cup 320. The ground coffee may be received within the brewing chamber 330 defined between the brewing piston 310 and the brewing cup 320.

In the example of Figure 18, the control unit 150 may command the grinder clutch 421 to cut off driving force transmission from the driving unit 400 to the grinder 200. The brewing clutch 422 may be operated to transmit driving force from the driving unit 400. The driving unit 400 may be operated to spin the output shaft 410 in a suitable direction to drive the brewing piston 310 towards the brewing cup 320. This way, the coffee ground may be compressed between the brewing piston 310 and the plunger 323 inside the brewing cup 320. The brewing piston 310 may be moved further towards the brewing cup 320 so as to move the plunger 323 as well. Heated water may enter the brewing chamber 330 through the water inlet 311. The ground coffee can be infused, and a coffee extraction drink can leave the brewing chamber 330 through the perforated plunger 323 and the dispensing outlet 321. The amount of ground coffee may be determined depending on the characteristics of the coffee drink to be brewed. The holding arms 327 in Figure 18 are arranged substantially at a second arm position.

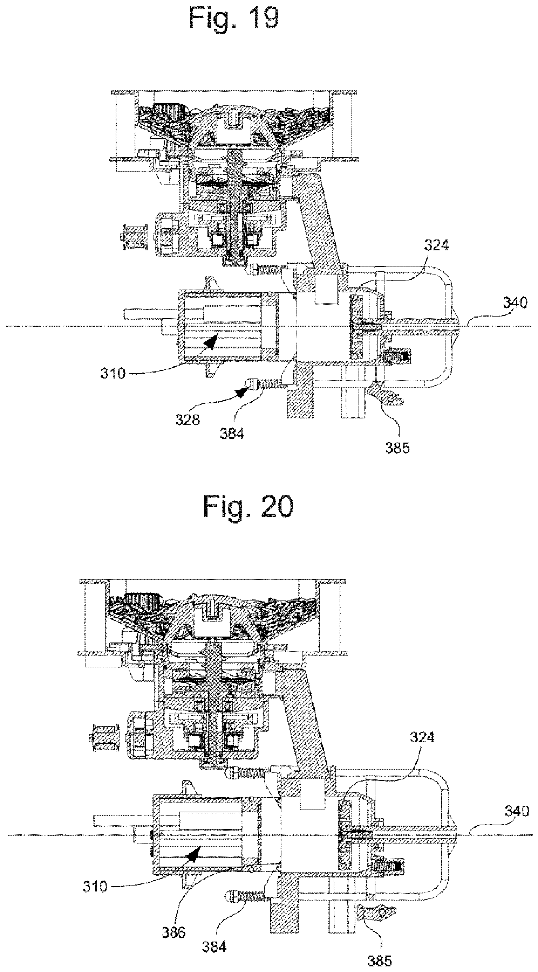

In the example of Figure 19, after coffee drink has left the brewing chamber 330, the driving unit 400 is operated in a reverse direction and the clutch mechanism 420 may be selected to transmit driving force to the brewing device 300 to rotate the brewing threaded spindle 350. This way the spindle nut 312 and so the brewing piston 310 can be moved away from the brewing cup 320. As the latch 385 still interlocks the holding arms 327, the plunger 323 may be substantially retained in spite of the force exerted by the springs 384.

In Figure 20, the control unit 150 may command the latch 385, for instance a solenoid to allow the holding arms 327 and so the plunger to be urged towards the brewing piston 310.

In the examples of Figures 19 and 20, the brewing piston may be arranged so that the sliding gate can be kept opened.

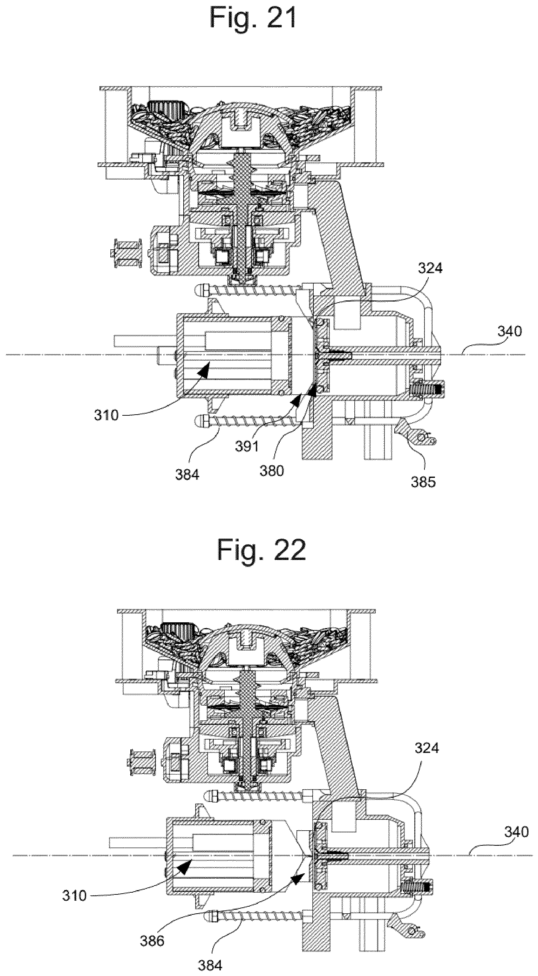

In the example of Figure 21, the first plunger end 324 has substantially reached the cup flange 380 such that the first plunger end 324 may be substantially flush with the cup flange 380. This way, an infused coffee cake can be ejected or fall from the brewing device 300 through a waste outlet 391. Some dregs of ground coffee may remain on the first plunger end 324. The driving unit 400 may be operated to drive the brewing piston 310 away from the brewing cup 320, as can be seen in the example of Figure 22. This way, the sliding gate 386 can clean up the plunger 323 upon closure.

When the ground coffee falls from the grinder 200, the brewing device 300 is in the decoupled position. The brewing piston 310 and the brewing cup 320 may be brought together along brewing longitudinal axis 340 to press the ground coffee inside the brewing chamber 330 in the coupled position.

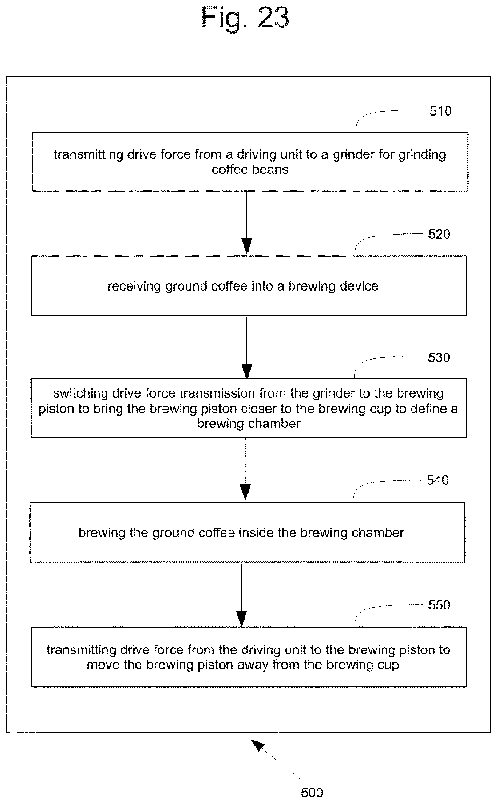

Figure 23 is a block diagram of a method of operation of a coffee machine 100 according to an example of the present disclosure. The method 500 may be performed using a coffee machine according to any examples described herein.

The method 500 comprises transmitting driving force from the driving unit 400 to the grinder 200 for grinding coffee bean, as represented at block 510. The transmission of driving force can be performed through the clutch mechanism 420 as described herein.

In block 520, receiving ground coffee into the brewing device 300, has been illustrated. The brewing device 300 comprises the brewing piston 310 and the brewing cup 320.

In block 530, switching driving force transmission from the grinder 200 to the brewing piston 310 to bring the brewing piston 310 closer to the brewing cup 320 to define the brewing chamber 330, has been illustrated. The coffee ground may be received by the brewing chamber in a coupled position of the brewing piston 310 and the brewing cup 320. The brewing chamber can be defined in the coupled position. The brewing piston 310 can be moved along the brewing longitudinal axis 340 of the brewing device 300.

In examples, the coupled position as herein disclosed may comprise the brewing piston 310 and the brewing cup 320 defining a space like the brewing chamber 330 to receive the ground coffee and perform infusion of the ground coffee within the brewing chamber. The size of the brewing chamber may be varied depending on the degree of relative approach between the brewing piston 310 and the brewing cup 320.

In block 540, brewing the ground coffee inside the brewing chamber 330, has been represented. According to some examples of the method 500, brewing the ground coffee inside the brewing chamber may comprise introducing heated water into the brewing chamber 330. Heated water may enter the brewing chamber, and the ground coffee can be infused. The heated water may be introduced at a relative overpressure. The coffee drink may leave the brewing chamber 330.

The method 500 further comprises transmitting driving force from the driving unit 400 to the brewing piston 310 to move the brewing piston 310 away from the brewing cup 320 as represented at block 550. After brewing of the ground coffee, the brewing piston 310 can be separated from the brewing cup 320 to eject the infused coffee ground.

According to the examples of the present disclosure a single driving unit may drive the grinder, the relative movement of the brewing piston 310 and the brewing cup 320 to brew ground coffee therebetween and removing the infused ground coffee from the brewing device. This may allow to reduce overall size of the coffee machine and simplify even more the operation of the coffee machine.

For reasons of completeness, various aspects of the present disclosure are set out in the following numbered clauses:
Clause 1. A coffee machine comprising:
   a grinder for grinding coffee beans;
   a brewing device for brewing ground coffee, wherein the brewing device comprises a brewing piston movable relative to a brewing cup;
   a driving unit for driving at least one of the grinder and the brewing piston;
   a clutch mechanism configured to transmit driving force from the driving unit to at least one of the grinder and the brewing piston.
Clause 2. The coffee machine according to clause 1, wherein the brewing device comprises a brewing longitudinal axis, and the brewing piston is movable along the brewing longitudinal axis.
Clause 3. The coffee machine according to clause 2, wherein the brewing longitudinal axis is arranged substantially horizontal.
Clause 4. The coffee machine according to any of clauses 1-3, wherein the driving unit comprises an electric motor having a motor rotation axis.
Clause 5. The coffee machine according to clause 4, wherein the motor rotation axis is arranged substantially horizontal.
Clause 6. The coffee machine according to clause 4, wherein the electric motor comprises an output shaft.
Clause 7. The coffee machine according to clauses 2 and 4, wherein the motor rotation axis is substantially parallel to the brewing longitudinal axis.
Clause 8. The coffee machine according to any of clauses 1 - 7, wherein the clutch mechanism is configured to allow or cut off driving force transmission from the driving unit to the grinder and/or the brewing piston.
Clause 9. The coffee machine according to any of clauses 1 - 8, wherein the clutch mechanism comprises a grinder clutch and a brewing clutch.
Clause 10. The coffee machine according to clause 8, wherein the grinder clutch and the brewing clutch comprise a corresponding electromagnetic clutch.
Clause 11. The coffee machine according to clause 2, wherein the brewing device comprises a brewing threaded spindle to move the brewing piston along the brewing longitudinal axis.
Clause 12. The coffee machine according to clause 11, wherein the brewing threaded spindle is substantially parallel to the brewing longitudinal axis.
Clause 13. The coffee machine according to clauses 7 and 11, comprising a belt to transmit driving force transmission from the clutch mechanism to the brewing threaded spindle.
Clause 14. The coffee machine according to any of clauses 11 - 13, wherein the brewing piston comprises a spindle nut configured to be moved back and forth along the brewing threaded spindle.
Clause 15. The coffee machine according to any of clauses 2-3, wherein the brewing device comprises a brewing guide to guide the movement of the brewing piston along the brewing longitudinal axis.
Clause 16. The coffee machine according to clause 15, wherein the brewing guide is substantially parallel to the brewing longitudinal axis.
Clause 17. The coffee machine according to any of clause 2 - 3, wherein the brewing device comprise a plunger and the brewing cup is configured to receive the plunger, wherein the plunger is configured to be moved along the brewing longitudinal axis.
Clause 18. The coffee machine according to clause 17, wherein the plunger comprises a first plunger end configured to press coffee material with the brewing piston, wherein the plunger comprises a second plunger end opposite to the first plunger end, wherein the brewing cup comprises a plunger hole to slidably receive at least a portion of the plunger in such a way that the second plunger end protrudes from the brewing cup.
Clause 19. The coffee machine according to clause 18, wherein the brewing device comprises a holding arm connected to the plunger, wherein the holding arm comprises a first arm end protruding from the brewing cup towards the brewing piston, and the holding arm comprises a second arm end configured to be connected to the plunger, the brewing cup comprising a cup flange having an arm through hole to slidably receive at least a portion of the holding arm.
Clause 20. The coffee machine according to clause 19, wherein a side wall of the cup is arranged between the holding arm and the first plunger end.
Clause 21. The coffee machine according to any of clauses 19 - 20, wherein the brewing device comprises a spring arranged between the first arm end and the cup flange in such a way that the first arm end is urged away from the cup flange.
Clause 22. The coffee machine according to any of clauses 19 - 21, wherein the holding arm is configured to be moved generally along the brewing longitudinal axis.
Clause 23. The coffee machine according to any of clauses 19 - 22, wherein the holding arm is configured to be moved at least between a first arm position and a second arm position, wherein the distance between the first arm end and the cup flange is greater in the first arm position than in the second arm position.
Clause 24. The coffee machine according to clause 23, wherein the brewing piston is configured to push the plunger such that the holding arm is moved from the first arm position to the second arm position when the brewing piston is moved toward the brewing cup.
Clause 25. The coffee machine according to any of clauses 23 - 24, wherein the brewing device comprises at least two holding arms embracing, at least partially, the brewing cup.
Clause 26. The coffee machine according to any of clauses 23 - 25, wherein the brewing device comprises four holding arms embracing, at least partially, the cup.
Clause 27. The coffee machine according to any of clauses 19 - 26, wherein the holding arm comprises a generally L-shaped configuration.
Clause 28. The coffee machine according to any of clauses 19 - 27, wherein the brewing device comprises a latch to retain the holding arm relative to the brewing cup.
Clause 29. The coffee machine according to clause 28, wherein the latch is activated by a solenoid actuator.
Clause 30. The coffee machine according to any of clauses 19 - 29, wherein the brewing device comprises a sliding gate configured to slide on the cup flange and perpendicularly to the brewing longitudinal axis.
Clause 31. The coffee machine according to clause 30, wherein the sliding gate comprises a chamfered edge to slide on a chamfered surface of the brewing piston facing the brewing cup.
Clause 32. The coffee machine according to any of clauses 19 - 31, wherein the holding arm comprises a projection to retain the spring between the cup flange and the first arm end.
Clause 33. The coffee machine according to any of clauses 19 - 32, wherein the brewing device comprises a receiving portion associated with an opening of the cup to receive ground coffee from the grinder.
Clause 34. The coffee machine according to any of clauses 1 - 33, wherein the brewing device comprises a generally cylindrical shape.
Clause 35. The coffee machine according to any of clauses 1 - 34, wherein one of the brewing piston and the brewing cup comprises a water inlet and the other one comprises a dispensing outlet.
Clause 36. The coffee machine according to clause 35, wherein the dispensing outlet comprises a shower screen.
Clause 37. A method of operation of a coffee machine comprising:
   transmitting driving force from a driving unit to a grinder for grinding coffee beans;
   receiving ground coffee into a brewing device, wherein the brewing device comprises a brewing piston and a brewing cup;
   switching driving force transmission from the grinder to the brewing piston to bring the brewing piston closer to the brewing cup to define a brewing chamber;
   brewing the ground coffee inside the brewing chamber;
   transmitting driving force from the driving unit to the brewing piston to move the brewing piston away from the brewing cup.
Clause 38. The method according to clause 37, wherein the brewing piston is moved along a brewing longitudinal axis of the brewing device.
Clause 39. The method according to any of clauses 37 - 38, wherein brewing the ground coffee inside the brewing chamber comprises introducing heated water into the brewing chamber.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A coffee machine (100) comprising:
a grinder (200) for grinding coffee beans;
a brewing device (300) for brewing ground coffee, wherein the brewing device comprises a brewing piston (310) movable relative to a brewing cup (320);
a driving unit (400) for driving at least one of the grinder and the brewing piston;
a clutch mechanism (420) configured to transmit driving force from the driving unit to at least one of the grinder and the brewing piston.

2. The coffee machine (100) according to claim 1, wherein the brewing device (300) comprises a brewing longitudinal axis (340), and the brewing piston (310) is movable along the brewing longitudinal axis.

3. The coffee machine (100) according to any of claims 1-2, wherein the driving unit (400) comprises an electric motor having a motor rotation axis (440).

4. The coffee machine (100) according to claims 2 and 3, wherein the motor rotation axis (440) is arranged substantially parallel to the brewing longitudinal axis (340).

5. The coffee machine (100) according to any of claims 1 - 4, wherein the clutch mechanism (420) comprises a grinder clutch (421) and a brewing clutch (422).

6. The coffee machine (100) according to claim 2, wherein the brewing device (300) comprise a plunger (323) and the brewing cup (200) is configured to receive the plunger, wherein the plunger is configured to be moved along the brewing longitudinal axis (340).

7. The coffee machine (100) according to claim 6, wherein the plunger (323) comprises a first plunger end (324) configured to press coffee material with the brewing piston (310), wherein the plunger comprises a second plunger end (325) opposite to the first plunger end (324), wherein the brewing cup (320) comprises a plunger hole (326) to slidably receive at least a portion of the plunger in such a way that the second plunger end protrudes from the brewing cup.

8. The coffee machine (100) according to claim 7, wherein the brewing device (300) comprises a holding arm (327) connected to the plunger (323), wherein the holding arm comprises a first arm end (328) protruding from the brewing cup (320) towards the brewing piston (310), and the holding arm comprises a second arm end (329) configured to be connected to the plunger (323), the brewing cup comprising a cup flange (380) having an arm through hole (381) to slidably receive at least a portion of the holding arm.

9. The coffee machine (100) according to claim 8, wherein the brewing device (300) comprises a spring (384) arranged between the first arm end (328) and the cup flange (380) in such a way that the first arm end (328) is urged away from the cup flange (380).

10. The coffee machine (100) according to any of claims 8-9, wherein the holding arm (327) is configured to be moved at least between a first arm position and a second arm position, wherein a distance between the first arm end (328) and the cup flange (380) is greater in the first arm position than in the second arm position.

11. The coffee machine (100) according to claim 10, wherein the brewing piston (310) is configured to push the plunger (323) such that the holding arm (327) is moved from the first arm position to the second arm position when the brewing piston is moved toward the brewing cup (320).

12. The coffee machine (100) according to any of claims 8 - 11, wherein the brewing device (300) comprises a latch (385) configured to retain the holding arm (327) relative to the brewing cup (320).

13. The coffee machine (100) according to any of claims 8 - 12, wherein the brewing device (300) comprises a sliding gate (386) configured to slide on the cup flange (380) and perpendicularly to the brewing longitudinal axis (340).

14. The coffee machine (100) according to claim 13, wherein the sliding gate (386) comprises a chamfered edge (387) to slide on a chamfered surface (388) of the brewing piston (310) facing the brewing cup (320).

15. A method (500) of operation of a coffee machine comprising:
transmitting (510) driving force from a driving unit to a grinder for grinding coffee beans;
receiving (520) ground coffee into a brewing device, wherein the brewing device comprises a brewing piston and a brewing cup;
switching (530) driving force transmission from the grinder to the brewing piston to bring the brewing piston closer to the brewing cup to define a brewing chamber;
brewing (540) the ground coffee inside the brewing chamber;
transmitting (550) driving force from the driving unit to the brewing piston to move the brewing piston away from the brewing cup.
